# EUROPÄISCHE PATENTSCHRIFT

(11) **EP 1 293 033 B1**
(45) Veröffentlichungstag und Bekanntmachung des Hinweises auf die Patenterteilung: **11.03.2009**
(21) Anmeldenummer: 01957854.1
(22) Anmeldetag: 15.06.2001
(51) Int. Cl.: H02P 6/14, H02P 6/00

(54) **STEUERUNG UND REGELUNG VON ELEKTROMOTOREN**
CONTROL AND REGULATION OF ELECTRIC MOTORS
COMMANDE ET REGULATION DE MOTEURS ELECTRIQUES

(30) Priorität: 20.06.2000 DE 10030130
(43) Veröffentlichungstag der Anmeldung: 19.03.2003
(73) Patentinhaber: Deutsches Zentrum für Luft- und Raumfahrt e.V., 51147 Köln (DE)
(72) Erfinder: DIETRICH, Johannes, 82205 Gilching (DE); GREBENSTEIN, Markus, 80469 München (DE); LANGE, Thomas, 82205 Gilching (DE); SCHEDL, Manfred, 85276 Pfaffenhofen (DE)
(74) Vertreter: Schmidt, Steffen J.
(86) Internationale Anmeldenummer: PCT/EP2001/006818
(87) Internationale Veröffentlichungsnummer: WO 2001/099267

(56) Entgegenhaltungen:
- US-A- 4 608 527
- US-A- 5 200 675
- US-A- 5 298 839
- US-A- 5 796 226
- US-A- 5 886 489

## Beschreibung

### Gebiet der Erfindung

Die vorliegende Erfindung betrifft im Allgemeinen den Betrieb von Elektromotoren und insbesondere den Betrieb von Gelenkantrieben für sogenannte Leichtbauroboter. Insbesondere betrifft die vorliegende Erfindung Verfahren und Vorrichtungen zur digitalen Einschaltwinkelsteuerung und -regelung von Elektromotoren, die z.B. für Gelenkantriebe von Leichtbaurobotern verwendet werden.

### Hintergrund der Erfindung

Herkömmlicherweise werden für Antriebseinheiten von Leichtbaurobotern elektromechanische Wandler mit hohem Wirkungsgrad verwendet wie z. B. schnelllaufende bürstenlose permanentmagneterregte Gleichstrommotoren. Die Antriebseinheiten sollen geringe elektrische Verlustleistungen haben, da deren Energieversorgung im Allgemeinen begrenzt ist und/oder reduziert werden soll. Ferner sollen die Antriebseinheiten möglichst hohe Momente und insbesondere hohe Stillstandsmomente abgeben, wobei die hierfür benötigte elektrische Leistung vor Allem aus thermischen Gründen möglichst klein sein soll.

Üblicherweise werden magnetfeldempfindliche Hall-Sensoren als Positionsgeber für eine berührungslose Kommutierung verwendet. Die Hall-Sensoren liefern im Wesentlichen nur Informationen über Positionen des Ständers und des Läufers relativ zu einander, erlauben aber keine exakten Aussagen über die elektrischen und magnetischen Verhältnisse des Motors. Diese ändern sich aber über den geforderten großen Drehzahlbereich erheblich, sodass eine Steuerung des Motors mit starren Einschaltwinkeln zu insgesamt hohen Verlustleitungen führt und damit der Wirkungsgrad des Motors verschlechtert wird.

Um Verlustleistungen zu minimieren, werden normalerweise mit pulsmodulierten Steuersignalen betriebene Leistungsschalter für die Spulensteuerung verwendet. Bei ausreichend hoher Modulationsfrequenz ergibt sich für den Motor und die Steuerelektronik ein quasi-kontinuierliches Signalverhalten, für das Amplituden- und Phasenkompensationsverfahren angegeben werden können. Anwendungen solche Verfahren werden im Folgenden beschrieben. Hierbei werden einzelnen Statorphasen sinusförmige oder rechteckförmige Steuersignale gegebenfalls über Pulsmodulatoren zugeführt.

### Stand der Technik

Aus der DE 44 04 926 A1 ist eine Ansteuereinrichtung für einen analog gesteuerten Gleichstromelektromotor bekannt, die eine Drehzahl eines Läufers des Elektromotors ermittelt und ein von der Drehzahl abhängiges Spannungs- und Winkelsteuersignal erzeugt. In Abhängigkeit des Spannungs- und Winkelsteuersignals werden die Stromleiter des Läufers mit Energie versorgt, wobei Impulssignale zum Betrieb des Läufers in ihrer Amplitude und Phasenwinkel relativ zur Stellung des Läufers in Abhängigkeit von dem Spannungs- und Winkelsteuersignal variabel sind. Die Erzeugung des Spannungs- und Winkelsteuersignals kann auf der Basis von vorbestimmten Werten erfolgen, die vorab ermittelt wurden, evtl. in einer Speichereinrichtung abgelegt sind, und möglichen Läuferdrehzahlen in Bezug auf den Motorwirkungsgrad Spannungs- und Winkelsteuerwerte zuordnen. Zur Erfassung von Läuferdrehzahlen sind neben Sensoren, wie z.B. Hall-Sensoren, optischen Sensoren oder Ultraschallsensoren, Einrichtungen vorgesehen, mit denen in Wicklungen induzierte Spannungen als Meßgrößen für Umdrehungsgeschwindigkeit und Position des Läufers in Zeitperioden erfaßt werden können, in denen die Wicklungen nicht mit Spannung beaufschlagt werden. Für unterschiedliche Belastungen und Drehzahlen wird in Abhängigkeit davon für eine vor- bzw. nacheilende Ansteuerung der Windungen der Versatzwinkel zwischen dem Ansteuerungssignal für den Läufer und dem Läufer eingestellt. Bei dieser bekannten Einrichtung und dem entsprechenden Ansteuerverfahren wird für jeden Betriebszustand jeweils ein gemeinsamer Versatzwinkel für alle Wicklungen des Läufers vorgegeben.

Die DE 41 00 864 A1 offenbart ein analoges Verfahren zum Ansteuern eines elektrischen Synchronmotors, bei dem die momentane Motorbelastung erfaßt und in Abhängigkeit davon eine Phasenverschiebung für alle an Statorwicklungen angelegten Wechselspannungen ermittelt wird. Insbesondere wird hierbei die Motorbelastung erfaßt, indem der in die Wicklungen fließende Gesamtlaststrom gemessen wird. Ferner wird mit einem Winkelgeber die Drehwinkellage eines Rotors des elektrischen Synchronmotors gemessen.

### Aufgabe der Erfindung

Aufgabe der Erfindung ist es, den Betrieb von Elektromotoren, die z.B. für Gelenkantriebe von Leichtbaurobotern verwendet werden, durch den Einsatz digitaler Steuer- und Regelverfahren zu verbessern.

### Kurzbeschreibung der Erfindung

Erfindungsgemäß wird dies durch Vorrichtungen und Verfahren zu direkten Steuerung und Regelung von digitalen Stellgrößen für eine Elektromotor gelöst, insbesondere von phasenbezogenen relativen Einschaltwinkeln bzw. Einschaltdauern bei konstante Amplitude ohne einen Einsatz von Modulationseinrichtungen.

Bei der Erfindung werden die Phasen eines Elektromotors einzeln, gruppenweise oder blockweise betrieben, wobei im Gegensatz zu einer Rechtecksteuerung drei . Schaltzustände (minus ,0 , plus) auftreten. Vorzugsweise dient die Erfindung zu Verwendung bei Vielphasen-Elektromotoren, die auf Grund ihrer besseren Laufruhe als Roboterantriebe verwendet werden. Vorzugsweise dient die Erfindung für Vielphasen-Elektromotoren mit Einzelspulenwicklungen (z.B. Einzelspulenstatoren).

Im Gegensatz zu herkömmlichen Verfahren werden bei der Erfindung anstelle eines Phasenwinkels als einzige zu steuernde/regelnde Zustandsgröße die Einschaltphase und die Einschaltdauer verwendet.

Die Erfindung ermöglicht es, entsprechend der Phasenzahl eines Elektromotors die obengenannten Modulatoren einzusparen, wodurch erfindungsgemäße Vorrichtungen einfacher aufgebaut sind.

Hierfür stellt die Erfindung eine Vorrichtung und ein Verfahren zur Einschaltwinkelsteuerung für Elektromotoren mit digitaler Steuerung der Phasenwicklungen mit den Merkmalen der unabhängigen Ansprüche bereit. Bevorzugte Ausgestaltungen der Erfindung sind in den abhängigen Ansprüchen definiert. Insbesondere dient die Erfindung zur Anwendung bei Vielphasen-Elektromotoren vorzugsweise mit direkter digitaler Steuerung beispielsweise von Statorphasenwicklungen.

Bei der Vorrichtung zur Einschaltwinkelsteuerung sind Einrichtungen zur Erfassung der aktuellen Drehzahl und des aktuellen Sollstromes eines Elektromotors sowie eine Kommutationseinheit vorhanden. Die Kommutationseinheit ist mit den Erfassungseinrichtungen verbunden, um einen Einschaltwinkel, der auch als Einschaltphase bezeichnet wird, für den Elektromotor zu bestimmen. Die Kommutationseinheit ist dazu eingerichtet, den Einschaltwinkel in Abhängigkeit von der erfassten Drehzahl und dem erfassten Sollstrom zu bestimmen.

Erfindungsgemäß ist eine mit der Kommutationseinheit verbundene Einrichtung vorhanden, um für die Wicklungen jeweils den aktuellen elektrischen Winkel zu erfassen. In Abhängigkeit von dem bestimmten Einschaltwinkel und dem jeweiligen elektrischen Winkel werden von der Kommutationseinheit die entsprechenden Einschaltwinkel der Wicklungen bestimmt.

Vorzugsweise weisen die Steuerungs- und Regelungsvorrichtungen Komponenten auf, um für die Wicklungen die jeweiligen aktuellen elektrischen Winkel zu erfassen. Hierbei bestimmt die Kommutationseinheit die Einschaltwinkel für die Wicklungen in Abhängigkeit von dem bestimmten Einschaltwinkel und dem entsprechenden elektrischen Winkel. Vorzugsweise werden aktuelle Einschaltwinkel von Wicklungen erfaßt, die ein Polpaar des Motors bilden.

Ferner wird bevorzugt, daß die Kommutationseinheit solche Wicklungen mit Energie versorgt, deren jeweiliger elektrischer Winkel größer als der bestimmte Einschaltwinkel für den Elektromotor und kleiner als ein aus der Summe des Einschaltwinkels und eines vorgegebenen optimalen elektrischen Schaltwinkels resultierende Winkel ist. Wicklungen, deren elektrische Winkel die zuvor genannte Bedingung nicht erfüllen, werden nicht mit Energie versorgt.

Untersuchungen haben gezeigt, dass der optimale elektrische Schaltwinkel (d.h. die optimale Einschaltdauer) im Wesentlichen unabhängig von Betriebsparametern des Motors ist und daher fest vorgegeben werden kann. Daher wird ein optimaler elektrischer Schaltwinkel, der die Dauer der Aktivierung der Motorspulen angibt, mittels einer vorab durchgeführten Optimierungsrechnung bestimmt. Somit sind für die Ermittlung und Einstellung eines optimalen Arbeitspunktes des Motors nur die Einschaltwinkel für die Wicklungen zu ermitteln.

Im Fall der Einschaltwinkelsteuerung werden mittels Optimierungsrechnungen für Sollströme und Drehzahlen des Motors optimale Einschaltwinkel errechnet. Die ermittelten Zuordnungen werden beispielsweise in Form einer Tabelle gespeichert.

Beim Betrieb der erfindungsgemäßen Steuerungsvorrichtung werden der aktuelle Sollstrom und die aktuelle Drehzahl des Motors gemessen. Unter Verwendung der zuvor ermittelten Zuordnungen von Drehzahlen und Sollströmen zu optimalen Einschaltwinkeln wird der für den aktuellen Betriebszustand des Motors geeignete Einschaltwinkel ermittelt.

Alternativ zu der Verwendung einer solchen Tabelle ist hier jede Einrichtung einsetzbar, durch die der Kommutationseinheit derartige Informationen bereitgestellt werden. So ist es z.B. möglich die Zuordnungen von Drehzahlen und Sollströmen zu Einschaltwinkeln während des Betriebs der erfindungsgemäßen Vorrichtung zu ermitteln.

Da der optimale elektrische Schaltwinkel (die optimale elektrische Schaltdauer) im Wesentlichen unabhängig von den Betriebszuständen des Motors ist, ist es nicht notwendig, den jeweiligen Ausschaltwinkel (Ausschaltzeitpunkt) zu ermitteln. Der entsprechende Ausschaltwinkel ergibt sich aus den ermittelten Einschaltwinkeln und dem vorgegebenen elektrischen Schaltwinkel.

Vorzugsweise wird eine der Kommutationseinheit zugeordnete Einrichtung verwendet, die Drehzahlen und Soll ströme des Elektromotors entsprechenden Einschaltwinkeln zuordnet. Diese Einrichtung kann ein Datenspeicher sein, der entsprechende Informationen (z.B. in Form einer Tabelle) aufweist, ein Mikroprozessor, der die erforderlichen Zuordnungen vor und/oder während des Betriebs der erfindungsgemäßen Einschaltwinkelsteuerung ermittelt und bereitstellt, und dergleichen. Unter Verwendung der von dieser Einrichtung bereitgestellten Zuordungen wird der Einschaltwinkel von der Kommutationseinheit bestimmt.

Die Vorrichtung zur Einschaltwinkelregelung umfaßt eine Einrichtung zur Erfassung von Phasenströmen eines Elektromotors, eine mit der Erfassungseinrichtung verbundene Kommutationseinheit sowie eine Rückführung einer einen aktuellen Einschaltwinkel für den Elektromotor wiedergebenden Größe zu der Kommutationseinheit. In Abhängigkeit von den erfassten Phasenströmen und der wenigstens einen rückgekoppelten Größe wird von der Kommutationseinheit ein neuer Einschaltwinkel für den Elektromotor bestimmt.

Erfindungsgemäß dienen die Erfassungseinrichtung zur Erfassung von Phasenströmen der Wicklungen des Elektromotors und eine mit der Kommutationseinheit verbundene Einrichtung zur Erfassung von aktuellen elektrischen Winkeln für die jeweiligen Wicklungen. Jeweils in Abhängigkeit von dem bestimmten Einschaltwinkel und dem Phasenstrom und des aktuellen elektrischen Winkels werden von der Kommutationseinheit Einschaltwinkel für die Wicklungen bestimmt.

Vorzugsweise ist der rückgekoppelte Regelkreis mit der Erfassungseinrichtung verbunden und ermittelt aus den Phasenströmen der Wicklungen aktuelle Einschaltwinkel derselben wiedergebende Größen, die zu der Kommutationseinheit zurückgekoppelt werden.

Vorzugsweise bestimmt die Kommutationseinheit die Einschaltwinkel, indem sie erste Größen, die die Phasenströme der Wicklungen während der ersten Hälfte einer vorgegebenen Einschaltdauer repräsentierten, und zweite Größen ermittelt, die die Inversen der Phasenströme während der zweiten Hälfte der vorgegebenen Einschaltdauer angeben. Aus den ersten und zweiten Größen bestimmt die Kommutationseinheit dann den neuen Einschaltwinkel für den Elektromotor.

Da, wie oben ausgeführt, der optimale elektrische Schaltwinkel (die optimale elektrische Schaltdauer) im Wesentlichen unabhängig von den Betriebszuständen des Motors ist, ist es nicht notwendig, den jeweiligen Ausschaltwinkel (Ausschaltzeitpunkt) zu ermitteln. Der entsprechende Ausschaltwinkel ergibt sich aus den ermittelten Einschaltwinkeln und der vorgegebenen Schaltdauer.

Bei der erfindungsgemäßen Vorrichtung zur Einschaltwinkelregelung wird die Verlustleistung des Elektromotors reduziert, indem beim Schalten entstehende Spitzenströme durch ein größtmögliches Gleichmaß der Ströme während der Schaltdauer verringert werden. Hierzu werden die Einschaltwinkel so ermittelt, dass zum Zeitpunkt des Einschaltens von Wicklungen des Elektromotors deren jeweilige Phasenlage relativ zu der induzierten Läuferspannung (EMK = ElektroMotorische-Kraft) so verschoben wird, dass die Strom-Zeit-Flächen jedes Phasenstromes während der ersten Zeitdauer und der zweiten Zeitdauer gleich groß werden.

Die hierfür erforderlichen Regelgrößen werden aus den einzelnen Phasenströmen gewonnen, indem die ersten und zweiten Größen ermittelt werden. Alternativ ist es möglich, während der zweiten Hälfte der Schaltdauer Größen genauso wie in der ersten Hälfte zu ermitteln, von denen dann zur Gewinnung der zweiten Größen die Vorzeichen invertiert werden.

Die zur Regelung rückgekoppelten Größen geben die aktuellen Einschaltwinkel für die Wicklungen an. Die aktuellen Einschaltwinkel wiedergebenden Größen werden verwendet, um die Bereiche der zeitlichen Verläufe der einzelnen Phasenströme zur Ermittlung der relevanten Strom-Zeit-Flächen festzulegen. Diese Bereiche werden in Abhängigkeit von den entsprechenden Einschaltwinkeln festgelegt. Auf diese Weise können Einflüsse auf die einzelnen Einschaltwinkel berücksichtigt werden, die eventuell beim Betrieb des Motors auftreten.

Um die Regelgrößen der erfassten Phasenströme zu ermitteln, können zwei Summiereinheiten verwendet werden, um die ersten bzw. die zweiten Größen zu ermitteln, die im zeitlichen Mittel den Strom-Zeit-Flächen der jeweiligen Hälften des Schaltwinkels entsprechen. Die Ausgänge dieser Summiereinheiten werden auf einen Integrator geschaltet. In quasi-stationärem Zustand, i.e. wenn der Motor genügend lange mit konstanter Drehzahl läuft, und der dynamische Einschwingvorgang beendet ist, entsteht am Integratorausgang ein Ausgangssignal mit konstantem Mittelwert, das proportional zu einem nahezu optimalen Wert des Einschaltwinkels ist. In diesem Zustand wird die den Regelfehler darstellende algebraische Summe der am Integratoreingang wirkenden Größen im Mittel null, d.h., die Strom-Zeit-Flächen der ersten und der zweiten Zeitdauer für alle Phasenströme sind im Mittel gleich groß.

Vorzugsweise werden für die erfassten Phasenströme Messsignale/Größen erzeugt, die jeweils den Wert des entsprechenden Phasenstroms angeben. Alternativ ist es vorgesehen, dass die die Phasenströme wiedergebenden Meßsignale/Größen dem Quadrat des jeweiligen Phasenstroms entsprechen.

Für eine separate Steuerung oder Regelung der Wicklungen weisen die Steuerungs- und Regelungsvorrichtungen Komponenten auf, um für Wicklungen aktuelle elektrische Winkel zu erfassen. Hierbei bestimmt die Kommutationseinheit Einschaltwinkel für die Wicklungen in Abhängigkeit von dem bestimmten Einschaltwinkel und dem jeweiligen aktuellen elektrischen Winkel der entsprechenden Wicklung. Vorzugsweise werden hierbei aktuelle Einschaltwinkel von Wicklungen erfaßt, die ein Polpaar des Motors bilden.

Um den Statorphasenwicklungen zum Einschaltzeitpunkt Strom mit der erforderlichen Phasenlage zuzuführen, wird vorzugsweise die aktuelle Position jeder Wicklung bestimmt. Unter diesen Positionen sind Positionen der Wicklungen relativ zu entsprechenden aktuellen Magnetfeldern zu verstehen. Auf der Grundlage von Meßsignalen, die die Positionen der Wicklungen angeben, wird von der Kommutationseinheit der jeweilige Einschaltwinkel bestimmt. Vorzugsweise umfaßt die Einrichtung zur Erfassung der Positionen der Wicklungen Hall-Sensoren.

Um einen kompakten Aufbau der erfindungsgemäßen Vorrichtungen zu realisieren, sollten sie Einrichtungen zum Betrieb des Elektromotors in Abhängigkeit von den Einschaltwinkeln für die Wicklungen aufweisen.

In diesen Fällen können die Einrichtungen zum Betrieb des Elektromotors zur Rückkopplung mit der Kommutationseinheit verbunden sein. Hierbei entsprechen die den aktuellen Einschaltwinkeln für die Statorphasenwicklungen wiedergebende Größen rückgekoppelten Steuersignalen dieser Einrichtungen.

### Kurzbeschreibung der Figuren

Bei der folgenden Beschreibung bevorzugter Ausführungsformen wird auf die beigefügten Figuren Bezug genommen, von denen zeigen:
- Fig. 1: eine schematische Darstellung einer erfindungsgemäßen Phasensteuerung und -regelung,
- Fig. 2: eine schematische Darstellung einer erfindungsgemäßen Kommutationseinheit zur Phasensteuerung,
- Fig. 3: eine schematische Darstellung einer erfindungsgemäßen Kommutationseinheit zur Phasenregelung,
- Fig. 4: eine Detaildarstellung der Kommutationseinheit aus Fig. 3,
- Fig. 5: einen schematischen Phasenverlauf eines unter Verwendung der Kommutationseinheit aus den Fig. 3 und 4 geregelten Phasenstroms,
- Fig. 6: eine graphische Darstellung von Einschaltwinkeln eines unter Verwendung der Kommutationseinheit aus den Fig. 3 und 4 geregelten Motors als Funktion relativer Regelfehler, und
- Fig. 7: eine graphische Darstellung von Verlustleistungen eines unter Verwendung der Kommutationseinheit aus den Fig. 3 und 4 geregelten Motors als Funktion von Einschaltwinkeln.

### Beschreibung bevorzugter Ausführungsformen

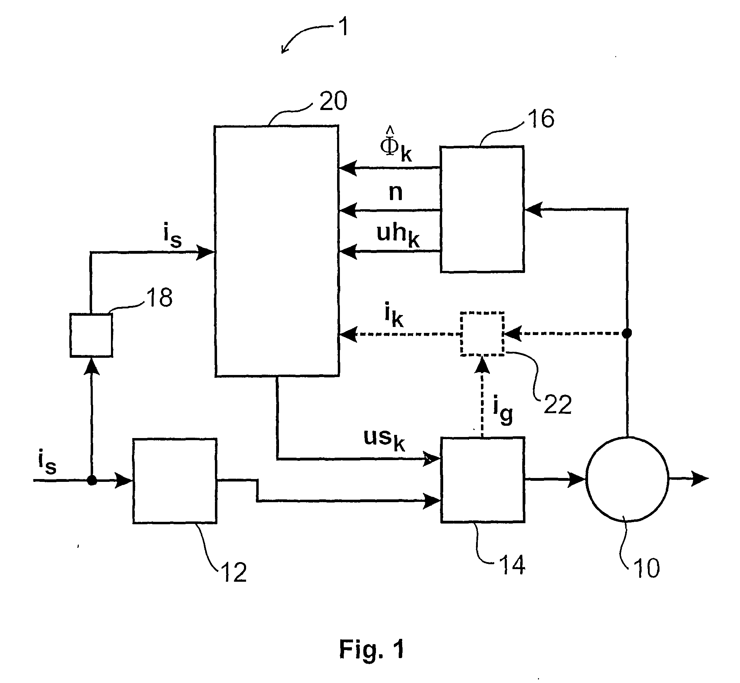

Im Rahmen des hier zugrunde liegenden Ansatzes wird eine Steuerungs/Regelungsvorrichtung 1 (Fig. 1) verwendet, die den Betrieb von Robotergelenkantrieben und insbesondere von deren Motoren verbessert sowie hinsichtlich erforderlicher Leistung für abzugebende Momente optimiert.

Die im folgenden beschriebenen Ausführungsformen können bei beliebigen Antrieben verwendet werden und eignen sich insbesondere für Antriebe mit Vielphasen-Elektromotoren, deren Wicklungen vorzugsweise als Einzelspulenwicklungen ausgeführt sind.

Bei als Einzelspulenwicklungen ausgeführten Wicklungen können die Wicklungen einzeln oder gruppen- bzw. blockweise mit einer Steuerungs-/Leistungseinrichtung des jeweiligen Motors verbunden werden. Daher können die Wicklungen in Abhängigkeit eines gewünschten Betriebszustandes gesteuert und betrieben werden. Auf diese Weise ist es auch möglich, solche Wicklungen nicht nur mit Spannungen/Strömen unterschiedlichen Vorzeichens zu versorgen, um erforderliche Magnetfelder zu erzeugen, sondern auch einzelne oder mehrere der Wicklungen während des Betriebs abzuschalten, d.h. nicht mit Energie zu versorgen.

Die im folgenden beschriebenen Ausführungsformen ermöglichen auch eine Steuerung und Regelung einzelner oder gruppenweise zusammengefaßter Wicklungen. Insbesondere einzeln gesteuerte oder geregelte Wicklungen führen zu einer Optimierung des Betriebs der genannten Antriebe, da die aktuellen Parameter jeder Wicklung berücksichtigt werden.

Die in Fig. 1 schematische dargestellte Vorrichtung 1 wird über einen vorgegebenen Sollstrom iₛ gesteuert, der (in erster Näherung) das gewünschte Sollmoment erzeugt, das von einem Motor 10 abgegeben werden soll. Über einen PWM-Regler 12, der einen nicht dargestellten, nachgeschalteten Glättungsfilter aufweisen kann, und einer Leistungselektronik 14, der die Wicklungen (nicht dargestellt) des Motors 10 mit Energie versorgt, wird dem Motor 10 der Sollstrom iₛ zugeführt. Über eine Messvorrichtung 16 wird die aktuelle Drehzahl n des Motors 10 sowie für Polpaare des Motors 10 bildende Wicklungen jeweils der aktuelle elektrische Winkel Φₖ erfaßt. Ferner wird für jeden Pol bzw. für die entsprechenden Wicklungen unter Verwendung von Hall-Sensoren die Position in dem Motor 10 erfasst, d.h. deren relative Lage zu den in dem Motor 10 erzeugten Magnetfeldern. Aus den Signalen der Hall-Sensoren erzeugt die Messeinrichtung 16 Größen uhₖ, die diese Positionen angeben.

Eine weitere Messvorrichtung 18 erfasst die Größe des Sollstromes iₛ, die wie die elektrischen Winkel Φₖ, die Drehzahl n und die die Wicklungspositionen angebenden Größen uhₖ an eine Kommutationseinheit 20 übertragen werden.

Diese Komponenten der Vorrichtung 1 sind erforderlich, wenn die Vorrichtung 1 als, wie im folgenden bezeichnet, Einschaltwinkelsteuerung betrieben wird. Bei der Ausführungsform der Vorrichtung 1, die im folgenden als Einschaltwinkelregelung bezeichnet wird, ist ferner eine Messeinrichtung 22 vorhanden, die die Phasenströme iₖ des Motors 10 erfasst und der Kommutationseinheit 20 zuführt.

Die Kommutationseinheit 20, die eine wesentliche Komponente der Vorrichtung 1 darstellt, ermöglicht sowohl eine verbesserte Steuerung des Motors 10 als auch eine verbesserte Regelung des Motors 10. Die Steuerungsvorrichtung ist einfacher als die Regelungsvorrichtung zu realisieren, die dafür eine zusätzliche Verringerung des Leistungsbedarfs des Motors 10 ermöglicht.

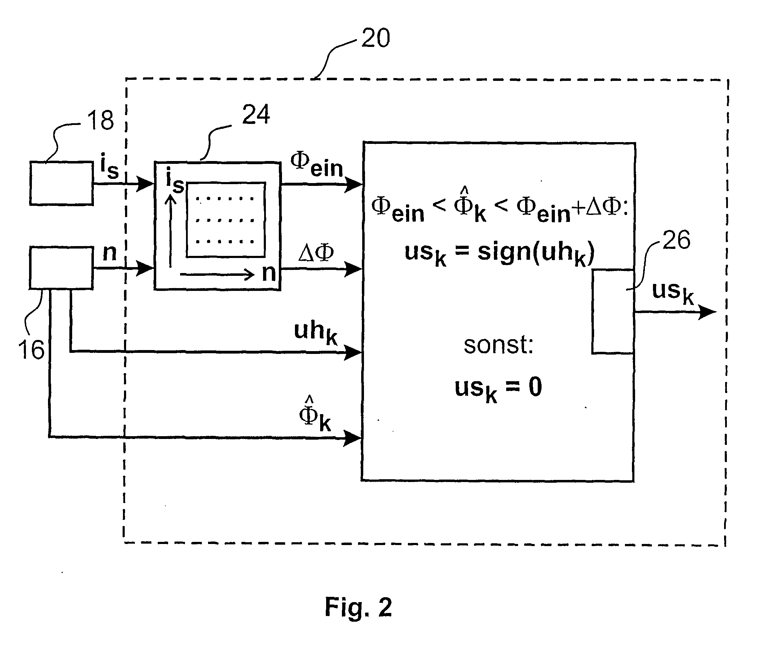

In Fig. 2 ist die als Einschaltwinkelsteuerung ausgeführte Vorrichtung 1 teilweise dargestellt. Die Kommutationseinheit 20 wird in Verbindung mit einer Speichereinheit 24 und einer Ausgabeeinheit 26 betrieben. Eine kompakte Bauform der Kommutationseinheit 20 wird erreicht, wenn die Speichereinheit 24 und/oder die Ausgabeeinheit 26, wie in Fig. 2 dargestellt, baueinheitlich mit der Kommutationseinheit 20 verbunden sind. Die Speichereinheit 24 und/oder die Ausgabeeinheit 26 können aber auch separate, der Kommutationseinheit 20 zugeordnete Einrichtungen sein.

Beim Betrieb der Vorrichtung 1 als Einschaltwinkelsteuerung wird mittels vorab durchgeführter Optimierungsrechnungen der optimale elektrische Schaltwinkel für den Motor 10 bestimmt, der die Schaltdauer für die Wicklungen angibt. Vorliegende Ergebnisse zeigen, dass der optimale elektrische Schaltwinkel, d.h. die optimale Einschaltdauer, im Wesentlichen unabhängig von Betriebszuständen des Motors 10 ist und kann daher fest vorgegeben werden. Somit ist für die Einstellung des optimalen Arbeitspunkts des Motors 10 lediglich die Einschaltphase bzw. der Einschaltwinkel zu bestimmen.

Hierfür weist die Speichereinheit 24 eine Tabelle auf, die Sollströme iₛ und Drehzahlen n Einschaltwinkeln Φₑᵢₙ zuordnet. Die hier verwendeten Sollströme und Drehzahlen können experimentell und/oder theoretisch ermittelte Größen sein. Ferner wird ein optimaler elektrischer Schaltwinkel ΔΦ bereitgestellt, z.B. von der Speichereinheit 24. Unter Verwendung des Einschaltwinkels Φₑᵢₙ, des optimalen elektrischen Winkels ΔΦ, der die Positionen von Wicklungen angebenden Größen uhₖ und der elektrischen Winkel Φₖ der Wicklungen werden Steuersignale usₖ erzeugt, um die Wicklungen zu steuern, d.h. mit Strömen unterschiedlichen Vorzeichens zu versorgen oder abzuschalten.

Hierbei werden Wicklungen, deren elektrischer Winkel Φₖ größer als der bestimmte Einschaltwinkel Φₑᵢₙ und kleiner als der aus der Summe des Einschaltwinkels Φₑᵢₙ und des optimalen elektrischen Schaltwinkels ΔΦ resultierende Winkel ist, mit Energie versorgt. Die Phasenlage der den entsprechenden Wicklungen zugeführten Ströme wird von der Polarität der Messsignale der Hall-Sensoren bzw. der Vorzeichen der diese angebenden Größen uhₖ bestimmt.

Wicklungen, deren jeweiliger elektrischer Winkel Φₖ die zuvor genannte Bedingung nicht erfüllt, werden nicht mit Energie versorgt. In Abhängigkeit von den Eingangsgrößen der Kommutationseinheit 20 sowie der daraus ermittelten Parameter erzeugt die Kommutationseinheit 20 und/oder die Ausgabeeinrichtung 26 die Steuersignale usₖ zur Steuerung der Wicklungen, wobei die Steuersignale usₖ, wie in Fig. 1 dargestellt, der Leistungselektronik 22 zur Verfügung gestellt werden, wobei die Steuersignale usₖ der Leistungselektronik 22 zur Verfügung gestellt werden.

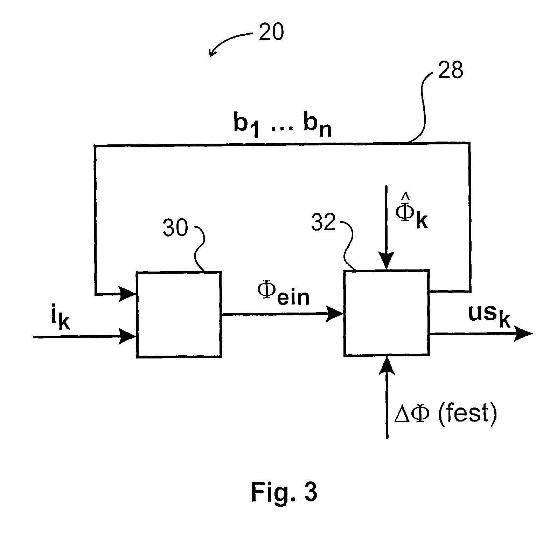

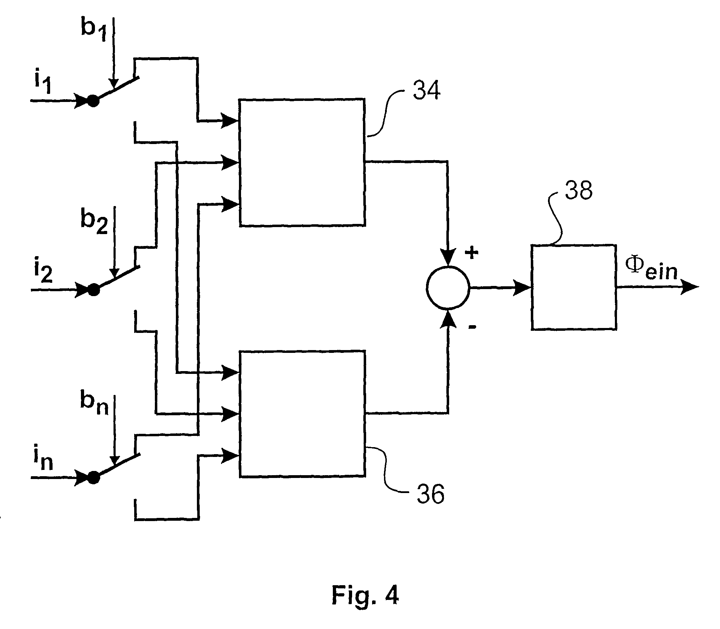

Die als Einschaltwinkelregelung ausgeführte Kommutationseinheit 20, die bei der Vorrichtung 1 verwendet wird, ist in den Fig. 3 und 4 dargestellt. Hier weist die Kommutationseinheit 20 einen rückgekoppelten Regelkreis 28 auf, der mit den obengenannten Steuersignalen usₖ vergleichbare Größen b₁, ..., bₙ zu einer Einrichtung 30 zurückkoppelt. Die Einrichtung 30 dient zur Ermittlung des Einschaltwinkels Φₑᵢₙ in Abhängigkeit von den Phasenströmen des Motors 10, die mittels der in Fig. 1 gezeigten Messeinrichtung erfasst werden, sowie von den rückgekoppelten Größen b₁, ..., bₙ.

Der Kommutationseinheit 20 der Fig. 3 und 4 liegt der Ansatz zugrunde, dass die Verlustleistung des Motors 10 verringert werden kann, wenn während der Schaltdauer Stromspitzen durch einen möglichst gleichmäßigen Stromverlauf unterdrückt werden. Hierfür ist die Einschaltphase bzw. der Einschaltwinkel und folglich die Phasenlage für die Wicklungen relativ zu der in dem Motor 10 wirkenden elektromotorischen Kraft (EMK) so einzustellen, dass die Strom-Zeit-Flächen eines entsprechenden Wicklungsstroms während der ersten Hälfte und der zweiten Hälfte der durch den optimalen elektrischen Schaltwinkel vorgegebenen Schaltdauer gleich groß sind.

Hierfür wird aus den zu vergleichenden Strom-Zeit-Flächen eines Wicklungsstromes ein den Unterschied der betrachteten Flächen wiedergebender Regelfehler gewonnen. Die Größen b₁, ..., bₙ geben die Einschaltwinkel der Phasenströme an. Somit werden die Bereiche der zeitlichen Verläufe der Einzelnen Phasenströme, in denen die relevanten Strom-Zeit-Flächen ermittelt werden, unter Verwendung der Größen b₁, ..., bₙ festgelegt. In Abhängigkeit von den Größen b₁, ..., bₙ werden die die Wicklungsströme wiedergebenden Messsignale während der ersten Hälfte der Schaltdauer mittels einer Summiereinheit 34 addiert. Nach Ablauf der halben Schaltdauer werden die Messsignale von einer Summiereinheit 36 addiert und mit umgekehrtem Vorzeichen versehen. Die Ausgaben der Summiereinheit 34 und die invertierten Ausgaben der Summiereinheit 36 werden einem Integrator 38 zugeführt, der ein nicht dargestelltes Dynamikkompensationsnetzwerk aufweisen kann. Die Ausgabe des Integrators 38 gibt an, wie der Einschaltwinkel Φₑᵢₙ, der der Ausgabeeinrichtung 32 zugeführt wird, im Vergleich zu dem aktuellen Einschaltwinkel zu ändern ist. Unter Verwendung des Einschaltwinkels Φₑᵢₙ, der elektrischen Winkel Φₖ der Wicklungen und des vorgegebenen optimalen elektrischen Schaltwinkels ΔΦ erzeugt die Ausgabeeinrichtung 32 die Steuersignale usₖ.

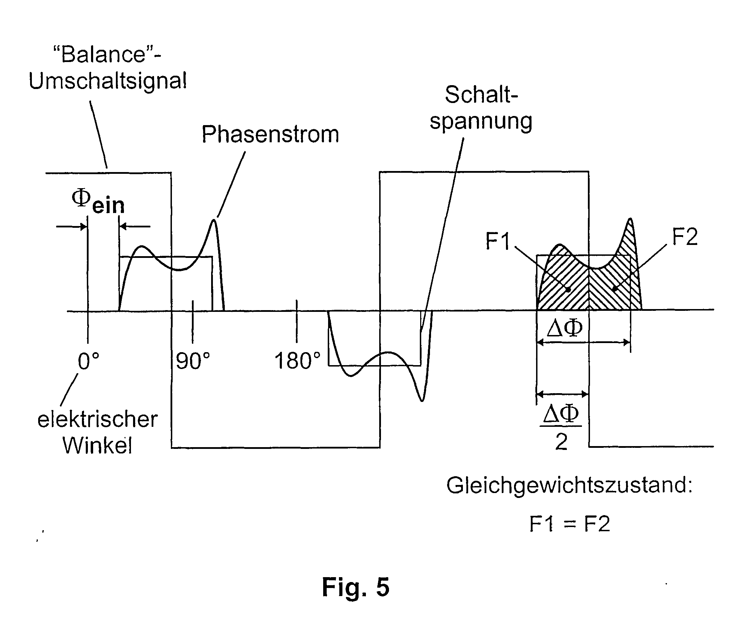

In Fig. 5 ist der Verlauf eines Phasenstromes dargestellt, der bei Verwendung der als Einschaltwinkelsteuerung ausgeführten Vorrichtung 1 erzeugt wird. Der hier dargestellte Fall stellt den stationären Grenzfall für eine Phase dar, bei dem die Strom-Zeit-Flächen F1 und F2 gleich sind.

Eine zusätzliche Verbesserung wird erreicht, wenn zur Bestimmung der Ausgangsgröße des Reglers nicht die erfassten Phasenströme, sondern Größen verwendet werden, die jeweils das Quadrat des entsprechenden Phasenstromes angeben.

Die zuvor beschriebene Einschaltwinkelregelung kompensiert Änderungen von Zeitkonstanten des Motors 10, die sich beispielsweise aus Änderungen der Wicklungswiderstände durch Erwärmung ergeben. Unabhängig von derartigen Änderungen wird mittels der Einschaltwinkelregelung für jeden Betriebszustand des Motors 10 ein Arbeitspunkt eingestellt, bei dem im Wesentlichen der optimale Wirkungsgrad des Motors 10 erreicht wird.

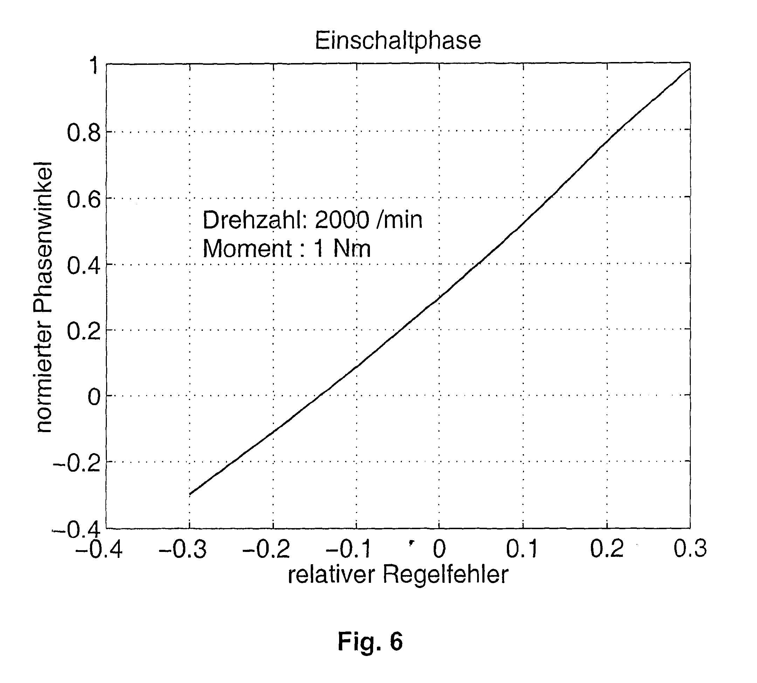

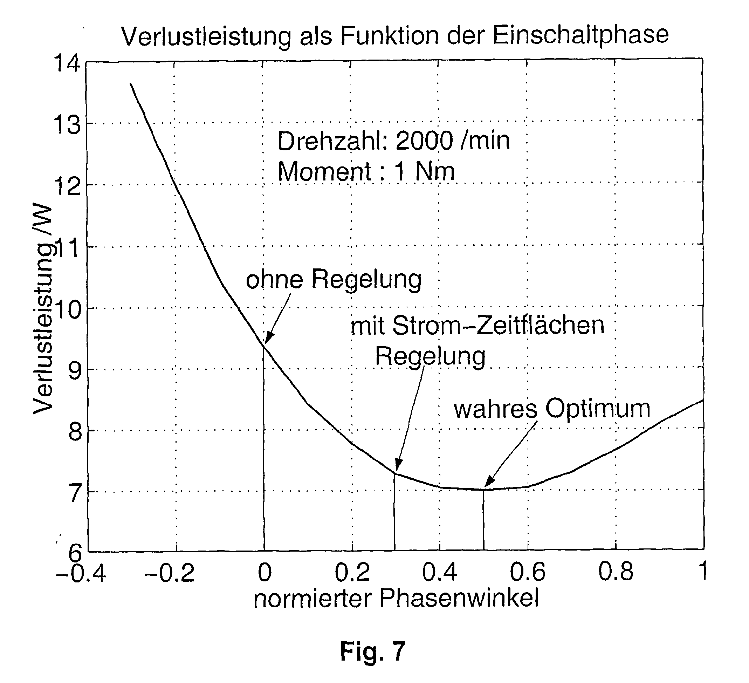

In den Fig. 6 und 7 sind Messergebnisse dargestellt, die bei Verwendung der Einschaltwinkelregelung ermittelt wurden. Wie in Fig. 6 zu sehen, besteht bei vorgegebenem Sollstrom ein nahezu linearer Zusammenhang zwischen dem Einschaltwinkel und der aus den Unterschieden von Strom-Zeit-Flächen resultierenden Regelabweichung. Aus der in Fig. 7 dargestellten Verlustleistung ist zu erkennen, dass das Minimum der Verlustleistung in der Nähe des stationären Gleichgewichtszustands auftritt, der einem Regelfehler von Null entspricht. Ferner ist eine deutliche Verringerung der Verlustleistung, d.h. eine Verbesserung des Wirkungsgrades, gegenüber dem ungeregelten Fall zu erkennen, der bei einem Einschaltwinkel von Null vorliegt.

## Patentansprüche

1. Vorrichtung zur Einschaltwinkelsteuerung für einen Elektromotor mit digitaler Steuerung der Phasenwicklungen, die einzeln oder gruppen- bzw. blockweise gesteuert und betrieben werden, mit:
- Einrichtungen (16, 18) zur Erfassung einer aktuellen Drehzahl (n) und eines aktuellen Sollstromes (iₛ) des Elektromotors (10) und
- einer mit der Erfassungseinrichtungen (16, 18) verbundenen Kommutationseinheit (20) zur Bestimmung eines Einschaltwinkels (Φₑᵢₙ) für den Elektromotor (10) in Abhängigkeit von der Drehzahl (n) und dem Sollstrom (iₛ),
**dadurch gekennzeichnet, daß**
- eine mit der Kommutationseinheit (20) verbundene Einrichtung (16) zur Erfassung der aktuellen elektrischen Winkel (Φₖ) der Wicklungen vorgesehen ist, und
- die Kommutationseinheit (20) zur Bestimmung von Einschaltwinkeln (Φₑᵢₙₖ) für die Wicklungen in Abhängigkeit von dem bestimmten Einschaltwinkel (Φₑᵢₙ) und von den aktuellen elektrischen Winkeln (Φₖ) eingerichtet ist.

2. Vorrichtung nach Anspruch 1, **dadurch gekennzeichnet, daß**
- eine mit der Kommutationseinheit (20) verbundene Einrichtung (16) zur Erfassung von Positionen der Wicklungen (10) vorgesehen ist, und
- die Kommutationseinheit (20) zur Bestimmung der Einschaltwinkel (Φₑᵢₙₖ) für die Wicklungen in Abhängigkeit von entsprechende Positionen wiedergebenden Größen (uhₖ) eingerichtet ist.

3. Vorrichtung nach Anspruch 1 oder 2, **dadurch gekennzeichnet, daß**
- die Kommutationseinheit (20) ausgelegt ist,
-- Wicklungen mit Energie zu versorgen, deren jeweiliger elektrischer Winkel (Φₖ) größer als der bestimmte Einschaltwinkel (Φₑᵢₙ) und kleiner als ein aus der Summe des Einschaltwinkels (Φₑᵢₙ) und eines vorgegebenen optimalen elektrischen Schaltwinkels (ΔΦ) resultierender Winkel ist, und
-- Wicklungen nicht mit Energie zu versorgen, deren jeweiliger elektrischer Winkel (Φₖ) kleiner als der bestimmte Einschaltwinkel (Φₑᵢₙ) und größer als der aus der Summe des Einschaltwinkels (Φₑᵢₙ) und des vorgegebenen optimalen elektrischen Schaltwinkels (ΔΦ) resultierende Winkel ist.

4. Vorrichtung nach einem der vorhergehenden Ansprüche, **gekennzeichnet durch**
- eine der Kommutationseinheit (20) zugeordnete Einrichtung (24) zum Bereitstellen von Drehzahlen und Sollströmen zu entsprechenden Einschaltwinkeln für den Elektromotor (10) der Kommutationseinheit (20) zur Bestimmung des Einschaltwinkels (Φₑᵢₙ).

5. Verfahren zur Einschaltwinkelsteuerung für einen Elektromotor mit digitaler Steuerung der Phasenwicklungen, die einzeln oder gruppen- bzw. blockweise gesteuert und betrieben werden, mit folgenden Schritten:
- Erfassen einer aktuellen Drehzahl (n) und eines aktuellen Sollstromes (iₛ) des Elektromotors (10),
- Bestimmen eines Einschaltwinkels (Φₑᵢₙ) für den Elektromotor (10) in Abhängigkeit von der erfassten Drehzahl (n) und dem erfassten Sollstrom (iₛ), und
- Betreiben des Elektromotors (10) in Abhängigkeit von dem Einschaltwinkel (Φₑᵢₙ), **gekennzeichnet durch**
- Erfassen der aktuellen elektrischen Winkel (Φₖ) der Wicklungen, und
- Bestimmen von Einschaltwinkeln (Φₑᵢₙₖ) für die Wicklungen in Abhängigkeit von dem bestimmten Einschaltwinkel (Φₑᵢₙ) und von den aktuellen elektrischen Winkeln (Φₖ) der Wicklungen.

6. Verfahren nach Anspruch 5, **gekennzeichnet durch**:
- Erfassen von Positionen für die Wicklungen, und
- Bestimmen der Einschaltwinkel (Φₑᵢₙₖ) für die Wicklungen in Abhängigkeit von entsprechende Positionen wiedergebenden Größen (uhₖ).

7. Verfahren nach Anspruch 5 oder 6, **gekennzeichnet durch**:
- Zuführen von Energie zu Wicklungen, deren jeweiliger elektrischer Winkel (Φₖ) größer als der bestimmte Einschaltwinkel (Φₑᵢₙ) und kleiner als ein aus der Summe des Einschaltwinkels (Φₑᵢₙ) und eines vorgegebenen optimalen elektrischen Schaltwinkels (ΔΦ) resultierender Winkel ist, und
- Zuführen von Energie zu Wicklungen, deren jeweiliger elektrischer Winkel (Φₖ) kleiner als der bestimmte Einschaltwinkel (Φₑᵢₙ) und größer als der aus der Summe des Einschaltwinkels (Φₑᵢₙ) und des vorgegebenen optimalen elektrischen Schaltwinkels (ΔΦ) resultierende Winkel ist.

8. Verfahren nach einem der Ansprüche 5 bis 7, **dadurch gekennzeichnet, daß**:
- vor dem Erfassen der aktuellen Drehzahl (n) und des aktuellen Sollstromes (iₛ) Einschaltwinkel in Abhängigkeit von Drehzahlen und Sollströmen des Elektromotors (10) ermittelt werden, und
- der Einschaltwinkel (Φₑᵢₙ) unter Verwendung der zuvor ermittelten Einschaltwinkel bestimmt wird.

9. Verfahren nach einem der Ansprüche 5 bis 8, **gekennzeichnet durch**:
- Bestimmen des Einschaltwinkel (Φₑᵢₙ) **durch** Interpolation geeigneter zuvor ermittelter Einschaltwinkel, wenn für die erfasste Drehzahl (n) und den erfassten Sollstrom (iₛ) kein entsprechender Einschaltwinkel zuvor ermittelt wurde.

## Claims

1. A device for control of a starting angle for an electric motor having a digital control for phase windings which are controlled and operated separately, in groups or in blocks, the device comprising:
- equipment (16, 18) for acquisition of an actual number of revolutions (n) and an actual ideal current (iₛ) of the electric motor (10), and
- a commutation unit (20) for determination of a starting angle (Φₑᵢₙ) for the electric motor (10) dependent on the number of revolutions (n) and the ideal current (iₛ), the commutation unit (20) being connected to the acquisition equipment (16, 18),
**characterized in that**
- an equipment (16) is designed for acquisition of actual electrical angles (Φₖ) of the windings, the equipment (16) being connected to the commutation unit (20), and
- the commutation unit (20) is arranged for determination of starting angles (Φₑᵢₙₖ) for the windings dependent on the determined starting angle (Φₑᵢₙ) and the actual electrical angles (Φₖ).

2. A device according to claim 1, **characterized in that**
- an equipment (16) is designed for acquisition of positions of the windings, the equipment (16) being connected to the commutation unit (20), and
- the commutation unit (20) is arranged for determination of the starting angles (Φₑᵢₙₖ) for the windings dependent on values (uhₖ) reflecting corresponding positions.

3. A device according to claims 1 or 2, **characterized in that**
- the commutation unit (20) is designed to
o supply windings with energy, whose respective electrical angle (Φₖ) is greater than the determined starting angle (Φₑᵢₙ) and less than an angle resulting from the sum of the starting angle (Φₑᵢₙ) and a predetermined optimal electrical switching angle (ΔΦ), and
o not supply windings with energy, whose respective electrical angle (Φₖ) is less than the determined starting angle (Φₑᵢₙ) or greater than the angle resulting from the sum of the starting angle (Φₑᵢₙ) and the predetermined optimal electrical switching angle (ΔΦ).

4. A device according to any one of the foregoing claims, **characterized by**
- an equipment (24) assigned to the commutation unit (20) for provision of numbers of revolutions and ideal currents for corresponding starting angles for the electric motor (10) of the commutation unit (20) for determination of the starting angle (Φₑᵢₙ).

5. A method for control of a starting angle for an electric motor having a digital control for phase windings which are controlled and operated separately, in groups or in blocks, the method comprising the following steps:
- acquiring an actual number of revolutions (n) and an actual ideal current (iₛ) of the electric motor (10),
- determining a starting angle (Φₑᵢₙ) for the electric motor (10) dependent on the detected number of revolutions (n) and the detected ideal current (iₛ), and
- operating the electric motor (10) dependent on the starting angle (Φₑᵢₙ),
**characterized by**
- acquiring the actual electrical angles (Φₖ) of the windings, and
- determining starting angles (Φₑᵢₙₖ) for the windings dependent on the determined starting angle (Φₑᵢₙ) and the actual electrical angles (Φ) of the windings.

6. A method according to claim 5, **characterized by**:
- acquiring positions for the windings, and
- determining the starting angles (Φₑᵢₙₖ) for the windings dependent on values (uhₖ) reflecting corresponding positions.

7. A method according to claim 5 or 6, **characterized by**:
- supplying windings with energy, whose respective electrical angle (Φₖ) is greater than the determined starting angle (Φₑᵢₙ) and less than an angle resulting from the sum of the starting angle (Φₑᵢₙ) and a predetermined optimal electrical switching angle (ΔΦ), and
- not supplying windings with energy, whose respective electrical angle (Φₖ) is less than the determined starting angle (Φₑᵢₙ) or greater than the angle resulting from the sum of the starting angle (Φₑᵢₙ) and the predetermined optimal electrical switching angle (ΔΦ).

8. A method according to any one of claims 5 to 7, **characterized in that**:
- starting angles are determined dependent on the numbers of revolutions and ideal currents of the electric motor (10) previous to the acquisition of the actual number of revolutions (n) and the actual ideal current (iₛ), and
- the starting angle (Φₑᵢₙ) is determined using the starting angles determined before.

9. A method according to any one of claims 5 to 8, **characterized by**:
- determining the starting angle (Φₑᵢₙ) by interpolation of appropriate starting angles determined before in case no corresponding starting angle has been determined before for the detected number of revolutions (n) and the detected ideal current (iₛ).

## Revendications

1. Dispositif pour commander l'angle de fonctionnement d'un moteur électrique à commande numérique des enroulements de phase qui sont commandés et qui fonctionnent individuellement, en groupe ou en bloc, comprenant :
- des dispositifs (16, 18) pour détecter un régime (n) et un courant de consigne (iₛ) actuels du moteur électrique (10) et
- une unité de commutation (20) reliée aux dispositifs de détection (16, 18) pour déterminer un angle de fonctionnement (Φₑᵢₙ) du moteur électrique (10) en fonction du régime (n) et du courant de consigne (iₛ),
**caractérisé en ce que**
- un dispositif (16) relié à l'unité de commutation (20) est prévu pour détecter les angles électriques actuels (Φₖ) des enroulements, et
- l'unité de commutation (20) est aménagée pour déterminer des angles de fonctionnement (Φₑᵢₙ) pour les enroulements en fonction de l'angle de fonctionnement (Φₑᵢₙ) déterminé et des angles électriques actuels (Φₖ).

2. Dispositif selon la revendication 1, **caractérisé en ce que**
- un dispositif (16) relié à l'unité de commutation (20) est prévu pour détecter des positions des enroulements (10), et
- l'unité de commutation (20) est aménagée pour déterminer les angles de fonctionnement (Φₑᵢₙ) pour les enroulements en fonction de grandeurs (uhₖ) représentant des positions correspondantes.

3. Dispositif selon la revendication 1 ou 2, **caractérisé en ce que**
- l'unité de commutation (20) est conçue
-- pour alimenter en énergie des enroulements dont l'angle électrique respectif (Φₖ) est supérieur à l'angle de fonctionnement (Φₑᵢₙ) déterminé et inférieur à un angle résultant de la somme de l'angle de fonctionnement (Φₑᵢₙ) et d'un angle de commutation (ΔΦ) électrique optimal donné, et
-- pour ne pas alimenter en énergie des enroulements dont l'angle électrique respectif (Φₖ) est inférieur à l'angle de fonctionnement (Φₑᵢₙ) déterminé et supérieur à l'angle résultant de la somme de l'angle de fonctionnement (Φₑᵢₙ) et de l'angle de commutation (ΔΦ) électrique optimal donné.

4. Dispositif selon l'une des revendications précédentes, **caractérisé par** :
- un dispositif (24) associé à l'unité de commutation (20) pour fournir des régimes et des courants de consigne par rapport à des angles de fonctionnement correspondants pour le moteur électrique (10) de l'unité de commutation (20) pour déterminer l'angle de fonctionnement (Φₑᵢₙ).

5. Procédé pour commander l'angle de fonctionnement d'un moteur électrique à commande numérique des enroulements de phase qui sont commandés et qui fonctionnent individuellement, en groupe ou en bloc, comprenant les étapes suivantes :
- la détection d'un régime (n) et d'un courant de consigne (iₛ) actuels du moteur électrique (10),
- la détermination d'un angle de fonctionnement (Φₑᵢₙ) pour le moteur électrique (10) en fonction du régime (n) et du courant de consigne (iₛ) détectés, et
- le fonctionnement du moteur électrique (10) en fonction de l'angle de fonctionnement (Φₑᵢₙ),
**caractérisé par**
- la détection des angles électriques actuels (Φₖ) des enroulements et
- la détermination d'angles de fonctionnement (Φₑᵢₙ) pour les enroulements en fonction de l'angle de fonctionnement (Φₑᵢₙ) déterminé et des angles électriques actuels (Φₖ) des enroulements.

6. Procédé selon la revendication 5, **caractérisé par** :
- la détection de positions pour les enroulements, et
- la détermination des angles de fonctionnement (Φₑᵢₙ) pour les enroulements en fonction de grandeurs (uhₖ) représentant des positions correspondantes.

7. Procédé selon la revendication 5 ou 6, **caractérisé par** :
- l'alimentation en énergie des enroulements dont l'angle électrique respectif (Φₖ) est supérieur à l'angle de fonctionnement (Φₑᵢₙ) déterminé et inférieur à un angle résultant de la somme de l'angle de fonctionnement (Φₑᵢₙ) et d'un angle de commutation (ΔΦ) électrique optimal donné, et
- l'alimentation en énergie des enroulements dont l'angle électrique respectif (Φₖ) est inférieur à l'angle de fonctionnement (Φₑᵢₙ) déterminé et supérieur à l'angle résultant de la somme de l'angle de fonctionnement (Φₑᵢₙ) et de l'angle de commutation (ΔΦ) électrique optimal donné.

8. Procédé selon l'une des revendications 5 à 7, **caractérisé en ce que** :
- des angles de fonctionnement sont calculés en fonction des régimes et des courants de consigne du moteur électrique (10) avant que soient détectés le régime (n) et le courant de consigne (iₛ) actuels, et
- l'angle de fonctionnement (Φₑᵢₙ) est déterminé en utilisant les angles de fonctionnement préalablement calculés.

9. Procédé selon l'une des revendications 5 à 8, **caractérisé par** :
- la détermination de l'angle de fonctionnement (Φₑᵢₙ) par interpolation d'angles de fonctionnement appropriés, calculés préalablement, lorsqu'aucun angle de fonctionnement correspondant n'a été calculé préalablement pour le régime (n) et le courant de consigne (iₛ) détectés.
